# EUROPÄISCHE PATENTSCHRIFT

(11) **EP 0 476 396 B1**
(45) Veröffentlichungstag und Bekanntmachung des Hinweises auf die Patenterteilung: **06.07.1994**
(21) Anmeldenummer: 91114641.3
(22) Anmeldetag: 30.08.1991
(51) Int. Cl.: B60K 20/04, F16H 59/04

(54) **Transport- und Einstellsicherung für Handschalthebel eines Wechselgetriebes insbesondere für Kraftfahrzeuge**
Securing device for transporting and mounting of a gearshift lever of a gearbox in particular for motor vehicles
Dispositif d'immobilisation pour transport et montage d'un levier de commande d'une boîte de vitesses en particulier pour véhicules automobiles

(30) Priorität: 20.09.1990 DE 4029789
(43) Veröffentlichungstag der Anmeldung: 25.03.1992
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Sabel, Gustav, W-5000 Köln 71 (DE); Winter-Peter, Wolfgang, W-5000 Köln 1 (DE)
(74) Vertreter: Messulam, Alec Moses

(56) Entgegenhaltungen:
- DE-A- 2 700 976
- DE-B- 1 165 433
- DE-C- 3 807 508
- US-A- 3 665 776

## Beschreibung

Die Erfindung bezieht sich auf eine Transport- und Einstellsicherung für den Schalthebel eines Wechselgetriebes, insbesondere für Kraftfahrzeuge, der im Oberbegriff des Patentanspruches 1 erläuterten Art.

Aus der DE-OS 27 00 976 ist eine Diebstahlsicherung für ein Kraftfahrzeug bekannt, bei dem für den Schalthebel eines Wechselgetriebes, insbesondere eines Kraftfahrzeuges eine mit dem Dom der Schalthebellagerung verrastbare Hutmanschette vorgesehen ist, die durch Verdrehen in eine Sperrstellung bringbar ist, in der jede Bewegung des Schalthebels unterbunden ist.

Die Hutmanschette, wie sie in den Figuren 5 bis 7 dieser Schrift gezeigt ist, wirkt hierbei über Bolzen auf an der Schalthebellagerung schwenkbar angeordnete Sperrhebel ein, um diese nach innen in eine den Schalthebel formschlüssig blockierende Sperrstellung zu drängen. In dieser Sperrstellung muß die Hutmanschette durch einen Schließzylinder in ihrer verdrehten Lage festgehalten werden.

Diese bekannte Vorrichtung zum Blockieren eines Schalthebels in einer Sperrstellung ist somit verhältnismäßig aufwendig und teuer in der Herstellung und schwierig in der Montage und kann dementsprechend nicht als einfach aufsetzbare und abnehmbare Transport- und Einstellsicherung verwendet werden.

In der Kraftfahrzeugindustrie ist es bereits bekannt, bei der Montage des Wechselgetriebes im Kraftfahrzeug den Schalthebel am Wechselgetriebe durch eine Transport- und Einstellsicherung in einer bestimmten Stellung festzuhalten, damit bei der Herstellung der Verbindungen vom äußeren Schaltgestänge zum inneren Schaltgestänge des Wechselgetriebes ein einwandfreies Zusammenspiel sichergestellt wird. Diese Transport- und Einstellsicherung war bisher in Form eines einfachen, aufrastbaren Hutmanschettenteiles ausgebildet, das den Schalthebel in einem Radialschlitz über federnde Haltezungen in seiner Neutralstellung festgelegt hatte.

Im rauhen Transport- und Montagebetrieb ist es immer wieder dazu gekommen, daß der Schalthebel durch Stöße ungewollt aus seiner bestimmten Stellung herausbewegt wurde, da die federnden Haltezungen keine formschlüssige Blockierung des Schalthebels ermöglichten.

Die Aufgabe der Erfindung ist es daher, eine Transport- und Einstellsicherung für den Schalthebel eines Wechselgetriebes, insbesondere für Kraftfahrzeuge, der im Oberbegriff des Patentanspruches 1 erläuterten Art derart zu verbessern, daß eine formschlüssige Festlegung des Schalthebels in einer vorbestimmten Stellung mit einfachen Maßnahmen ermöglicht wird und dennoch die erforderliche Vorrichtung einen geringen Bauaufwand aufweist und einfach aufgesetzt und abgenommen werden kann.

Gemäß der Erfindung wird diese Aufgabe gelöst, indem bei einer Transport- und Einstellsicherung für den Schalthebel eines Wechselgetriebes, insbesondere für Kraftfahrzeuge, der im Oberbegriff des Patentanspruches erläuterten Art die im Kennzeichenteil des Patentanspruches 1 aufgezeigten Merkmale vorgesehen werden.

In den Ansprüchen 2 und 3 sind zweckmäßige Einzelheiten der erfindungsgemäßen Vorrichtung erläutert. In Anspruch 4 ist eine weitere Ausführungsform der Erfindung erläutert.

Dadurch, daß mit dem ersten Hutmanschettenteil, das auf dem Dom der Schalthebellagerung verrastbar aufsetzbar ist und das den Schalthebel bereits in einem Radialschlitz zwischen federnden Haltezungen in einer vorbestimmten Stellung festhält, ein zweites Hutmanschettenteil verrastet ist, das gegenüber dem ersten Manschettenteil um etwa 90 Grad verdrehbar ist und hierdurch den Schalthebel voll formschlüssig in seiner vorbestimmten Stellung festhält, wird jedes unerwünschte Heraustreten des Schalthebels aus seiner vorbestimmten Stellung während des Transportes oder während der Montage und/oder Einstellung sicher vermieden.

Dadurch, daß am zweiten Hutmanschettenteil ein Vorsprung vorgesehen ist, der in eine Ausnehmung im ersten Hutmanschettenteil eingreift, kann dessen Verdrehwinkel festgelegt werden.

Durch entsprechende Rastnoppen und Rastmulden an den beiden Hutmanschettenteilen können die beiden Bauteile miteinander verrastet und in ihren jeweiligen Endlagen fixiert werden.

Durch eine geänderte Ausführung des Radialschlitzes mit den federnden Haltezungen am einen Hutmanschettenteil in Verbindung mit einer anderen Schlitzform mit einer Sperrfläche am anderen Hutmanschettenteil kann der Schalthebel auch in einer anderen vorbestimmten Stellung, die für die Einstellung der Schaltung günstiger ist, z.B. in der Stellung für den 1. Gang, festgelegt werden.

Die Erfindung wird anhand von in den beiliegenden Zeichnungen gezeigten Ausführungsformen näher erläutert. Es zeigt:
- Fig. 1: einen vertikalen Schnitt durch die Schalthebellagerung eines Wechselgetriebes mit der aufgesetzten Transport- und Einstellsicherung;
- Fig. 2: eine Draufsicht auf die Transport- und Einstellsicherung nach Fig. 1 in der Stellung der beiden verrasteten Hutmanschettenteile zum Aufsetzen auf die Schalthebellagerung;
- Fig. 3: einen vertikalen Schnitt entlang der. Linie III-III in Fig. 2;
- Fig. 4: einen Schnitt entlang der Linie IV-IV in Fig. 2;
- Fig. 5: eine Draufsicht auf die beiden Hutmanschettenteile in formschlüssiger Sperrstellung und
- Fig. 6: eine Draufsicht auf eine weitere Ausführungsform der Erfindung.

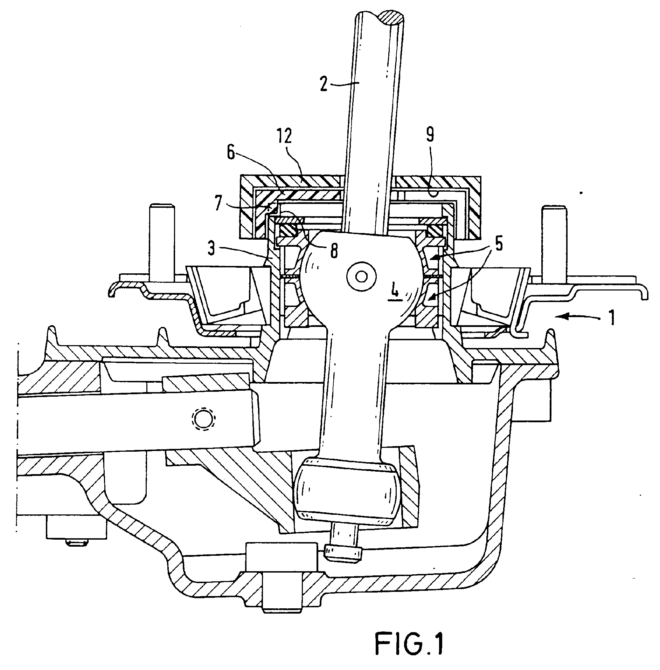

In Fig. 1 ist die Schalthebellagerung 1 für einen Schalthebel 2 gezeigt. Die Schalthebellagerung 1 weist normalerweise einen sogenannten Dom 3 auf, in dem die Gelenkkugel 4 des Schalthebels 2 in einer entsprechenden Kunststofflageranordnung 5 schwenkbar gelagert ist.

Zur Transport- und Einstellsicherung des Schalthebels 2 des Wechselgetriebes, in einer bestimmten Stellung war es bereits bekannt, ein Hutmanschettenteil 6 auf den Dom 3 aufzusetzen und über eine Nase 7 in einer Ausnehmung 8 am Dom 3 zu verrasten, wobei das Hutmanschettenteil einen Radialschlitz 9 aufwies, der zur Mitte des Hutmanschettenteiles 6 hin von zwei federnden Haltezungen 10 begrenzt wurde.

Zum Aufsetzen des Hutmanschettenteiles 6 muß dieser zunächst über den Radialschlitz 9 auf den Schalthebel 2 aufgesetzt werden, bis durch Zurückweichen der federnden Haltezungen 10 die vorbestimmte Stellung erreicht wird und danach wird das Hutmanschettenteil 6 nach unten auf den Dom 3 gedrückt und mittels der Nase 7 in der Ausnehmung 8 gegen Verdrehen festgelegt.

Obwohl die federnden Haltezungen 10 bereits eine Festlegung für den Schalthebel 2 in einer vorbestimmten Stellung sichergestellt haben, ist es im rauhen Transport- und Montagebetrieb doch immer wieder dazu gekommen, daß durch eine ungewollt am Schalthebel 2 einwirkende Kraft der Schalthebel 2 aus seiner vorbestimmten Stellung herausbewegt wurde.

Wurde diese Verlagerung des Schalthebels 2 nicht registriert, so konnte es beim Verbinden des äußeren Schaltgestänges mit dem inneren Schaltgestänge im Wechselgetriebe zu einer Fehlmontage kommen, die Schaltstörungen mit sich brachte.

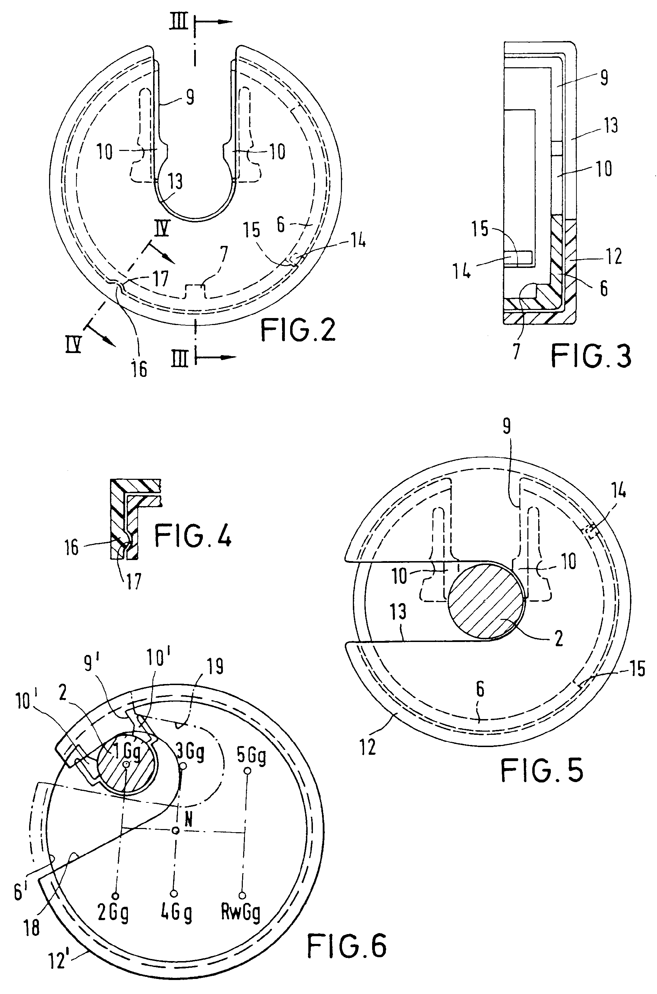

Wie aus den Figuren 2 bis 5 zu ersehen ist, wird gemäß der Erfindung ein weiteres Hutmanschettenteil 12, das gleichfalls einen Radialschlitz 13 aufweist auf das erste Hutmanschettenteil 6 verrastet aufgesetzt, wobei das zweite Hutmanschettenteil 12 radial gegenüber dem ersten Hutmanschettenteil 6 um etwa 90 Grad verdrehbar ist.

Der Verdrehwinkel zwischen den beiden Hutmanschettenteilen 6 und 12 kann durch einen am zweiten Hutmanschettenteil 12 nach innen ragenden Nocken 14 und eine am ersten Hutmanschettenteil 6 vorgesehene Ausnehmung 15 begrenzt werden.

Durch an aneinanderliegenden Flächen der Hutmanschettenteile 6 und 12 angeordneten Rastnoppen 16 und Rastmulden 17 können die beiden Hutmanschettenteile 6 und 12 zu einer Baueinheit verrastet werden, wobei die Rastnoppen 16 mit den Rastmulden 17 auch die Endlagen der Verdrehung der beiden Bauteile zueinander einrastend festlegen. Als aneinanderliegende Flächen können sowohl die Mantelflächen als auch die Bodenflächen gewählt werden.

Durch das zusätzliche zweite Hutmanschettenteil 12 kann somit durch eine Drehung um etwa 90 Grad eine völlige formschlüssige Festlegung des Schalthebels 2 in seiner vorbestimmten Stellung, hier in der Neutralstellung für den Transport, die Montage und die Einstellung festgelegt werden.

Wie aus Fig. 6 zu ersehen ist, kann die Transport- und Einstellsicherung auch derart ausgebildet werden, daß eine formschlüssige Festlegung des Schalthebels 2 in einer anderen, für die Schaltungseinstellung ggf. zweckmäßigeren Stellung, hier in der Stellung für den 1. Gang bei einem in Strich-Punkt-Linien angedeuteten Doppel-H-Schaltschema, möglich ist.

Hierzu sind lediglich in dem einen Hutmanschettenteil 6′ ein entsprechend veränderter Radialschlitz 9′ mit federnden Haltezungen 10′ und an dem anderen Hutmanschettenteil 12′ eine andere Schlitzform 18 mit einer Sperrfläche 19 erforderlich. Die Verrastung und Verdrehung beider Hutmanschettenteile 6′ und 12′ erfolgt in der gleichen Art und Weise, wie sie in Verbindung mit den Figuren 2 bis 5 beschrieben wurde.

## Patentansprüche

1. Transport- und Einstellsicherung für den Schalthebel (2) eines Wechselgetriebes, insbesondere für Kraftfahrzeuge, mit einem am Dom (3) der Schalthebellagerung (1) aufgesetzten Hutmanschette, die den Schalthebel in einer bestimmten Sperrstellung festhält,
**dadurch gekennzeichnet**, daß
- ein erstes Hutmanschettenteil (6) auf den Dom (3) der Schalthebellagerung (1) in einer durch eine Nase (7) und eine Ausnehmung (8) am Dom (3) gegen Verdrehen festgelegten Lage verrastet aufsetzbar ist, das den Schalthebel (2) in einem Radialschlitz (9) zwischen federnden Haltezungen (10) in einer bestimmten Stellung festhält und
- ein zweites Hutmanschettenteil (12) mit dem ersten Hutmanschettenteil (6) verrastet ist, das gleichfalls einen Radialschlitz (13) aufweist und das gegenüber dem ersten Hutmanschettenteil (6) verdrehbar ist und in dieser verdrehten Lage den Schalthebel (2) voll formschlüssig in seiner vorbestimmten Stellung festhält.

2. Transport- und Einstellsicherung nach Anspruch 1,
**dadurch gekennzeichnet**, daß
- das zweite Hutmanschettenteil (12) über einen von seinem Innenumfang nach innen vorragenden Vorsprung (14), der in eine Ausnehmung (15) im ersten Hutmanschettenteil (5) eingreift, in seinem Drehwinkel begrenzt ist.

3. Transport- und Einstellsicherung nach den Ansprüchen 1 und 2,
**dadurch gekennzeichnet**, daß
- am zweiten Hutmanschettenteil (12) und am ersten Hutmanschettenteil (6) an aneinanderliegenden Flächen, den Mantel- oder Bodenflächen, nach innen vorspringende Rastnoppen (16) vorgesehen sind, die mit entsprechenden Rastmulden (17) zusammenwirken, um die beiden Hutmanschettenteile (6 und 12) verrastend zusammenzuhalten und deren Verdreh-Endlagen festzulegen.

4. Transport- und Einstellsicherung nach den Ansprüchen 1 bis 3,
**dadurch gekennzeichnet**, daß
- am einen Hutmanschettenteil (6′) ein an eine bestimmte Stellung (1. Gang) angepaßter Radialschlitz (9′) mit federnden Zungen (10′) vorgesehen ist, die den Schalthebel (2) festhalten und
- am zweiten Hutmanschettenteil (12′) eine andere Schlitzform (18) vorgesehen ist, die nach einem Verdrehen den Schalthebel (2) über eine Sperrfläche (19) formschlüssig festhält.

## Claims

1. Transportation and adjustment protecting means for the gear-shift lever (2) of a transmission, in particular for motor vehicles, with a cap-type packing which is applied to the dome (3) of the gear-shift lever mounting(l) and secures the gear-shift lever in a specific arrested position, characterised in that a first cap-type packing member (6) can be applied in an engaged manner to the dome (3) of the gear-shift lever mounting (1) in a location which is secured against rotation by a nose (7) and a recess (8) on the dome (3) and secures the gear-shift lever (2) in a specific position in a radial slot (9) between resilient holding tongues (10) and a second cap-type packing member (12) engages with the first cap-type packing member (6), similarly has a radial slot (13), is rotatable relative to the first cap-type packing member (6) and, in this rotated location, secures the gear-shift lever (2) completely positively in its predetermined position.

2. Transportation and adjustment protecting means according to claim 1, characterised in that the second cap-type packing member (12) is limited in its angle of rotation by a projection (14) which projects inwardly from its internal periphery and meshes in a recess (15) in the first cap-type packing member (5).

3. Transportation and adjustment protecting means according to claims 1 and 2, characterised in that inwardly projecting catch knobs (16) which co-operate with corresponding catch cavities (17) are provided on contiguous faces, the circumferential or base faces, on the second cap-type packing member (12) and on the first cap-type packing member (6), in order to hold the two cap-type packing members (6 and 12) together in an engaging manner and to fix the rotational end locations thereof.

4. Transportation and adjustment protecting means according to claims 1 to 3, characterised in that a radial slot (9′) adapted to a specific position (first gear speed) with resilient tongues (10′) securing the gear-shift lever (2) is provided on one cap-type packing member (6′) and a different slot shape (18) which positively secures the gear-shift lever (2) via an arresting face (19) after a rotation is provided on the second cap-type packing member (12′).

## Revendications

1. Sécurité de transport et de réglage pour le levier de vitesse (2) d'une boîte de vitesse pour véhicules automobiles, avec une manchette en chapeau, appliquée sur le dôme (3) du palier de levier de vitesse (1), assurant la fixation du levier de vitesse dans une position de blocage déterminée, caractérisée en ce qu'
- une première partie de manchette en chapeau (6) peut être appliquée sur le dôme (3) du palier de levier de vitesse (1), dans une position bloquée en rotation, au moyen d'un ergot (7) et d'un évidement (8) réalisé dans le dôme (3), la partie (6) bloquant le levier de vitesse (2) dans une fente radiale (9), entre des languettes de fixation (10) élastiques, dans une position déterminée, et
- une deuxième partie de manchette en chapeau (12) est encliquetée avec la première partie de manchette en chapeau (6) et présente également une fente radiale (13), en pouvant tourner par rapport à la première partie de manchette (6) et bloquer dans cette position tournée le levier de vitesse (2), avec ajustement de forme total, dans sa position prédéterminée.

2. Sécurité de transport et de réglage selon la revendication 1, caractérisée en ce que
- l'angle de rotation de la deuxième partie de manchette (12) est limité, par l'intermédiaire d'une saillie (14), se projetant vers l'intérieur depuis sa périphérie intérieure et s'engageant dans un évidement (15) réalisé dans la première partie de manchette en chapeau (5).

3. Sécurité de transport et de réglage selon les revendications 1 et 2, caractérisée en ce que
- sur la deuxième partie de manchette en chapeau (12) et sur la première partie de manchette en chapeau (6) sont prévues, sur des faces appuyant l'une sur l'autre, les faces d'enveloppe ou de fond, des boutons d'encliquetage (16) faisant saillie vers l'intérieur et coopérant avec des auges d'encliquetage (17) correspondantes, afin de maintenir encliquetées les deux parties de manchette en chapeau (6 et 12) et de fixer leurs positions de rotation finales.

4. Sécurité de transport et de réglage selon l'une des revendications 1 à 3, caractérisée en ce qu'
- une fente radiale (9′), adaptée à une position déterminée (première vitesse), est prévue sur une partie de manchette en chapeau (6′), avec des languettes élastiques (10′) fixant le levier de vitesse (2), et
- une autre forme de fente (18) étant prévue sur la deuxième partie de manchette en chapeau (12′), assurant une fixation par ajustement de forme, après une rotation du levier de vitesse (2), par l'intermédiaire d'une surface de blocage (19).
